# EUROPÄISCHE PATENTSCHRIFT

(11) **EP 2 180 280 B1**
(45) Veröffentlichungstag und Bekanntmachung des Hinweises auf die Patenterteilung: **22.02.2012**
(21) Anmeldenummer: 09171865.0
(22) Anmeldetag: 30.09.2009
(51) Int. Cl.: F27B 1/00, F27B 1/16, C04B 2/12

(54) **Ringschachtofen**
Annular shift kiln
Four droit annulaire

(30) Priorität: 24.10.2008 DE 102008053136
(43) Veröffentlichungstag der Anmeldung: 28.04.2010
(73) Patentinhaber: Maerz Ofenbau AG, 8027 Zürich (CH)
(72) Erfinder: Piringer, Hannes, 5712, Beinwill am See (CH)
(74) Vertreter: Tetzner, Michael

(56) Entgegenhaltungen:
- EP-A- 0 139 025
- DE-A1- 2 227 516
- JP-U- 56 173 637

## Beschreibung

Die Erfindung betrifft einen Ringschachtofen sowie ein Verfahren zum Brennen von stückigem Material in einem Ringschachtofen.

Ringschachtöfen werden üblicherweise zum Brennen von Kalkstein, Dolomit und dergleichen eingesetzt und weisen einen Außenzylinder und einen Innenzylinder auf, die einen Ringschacht für das zu brennende Material bilden. Weiterhin sind in wenigstens einer Brennerebene Brennkammern am Außenzylinder angeordnet, die üblicherweise mit gasförmigen und/oder flüssigen Brennstoffen betrieben werden. Aufgrund der steigenden Preise für diese Energieträger ist es wünschenswert, auch feste Brennstoffe, insbesondere Kohle bzw. Braunkohle, in Ringschachtöfen einzusetzen.

Ein für den Einsatz von Kohle geeigneter Ringschachtofen ist aus der EP-A1-0 139 025 bekannt. Wird ein derartiger Ringschachtofen jedoch mit einem hohen Anteil an festen Brennstoffen befeuert, kann dies zu folgenden Nachteilen führen:
- Überhitzung der Ofenausmauerung im Bereich der Brennkammergewölbe durch zu hohe und zu lokale Wärmeentwicklung;
- Materialablagerungen im Bereich des Innenzylinders durch schlechten Ausbrand des Brennstoffs in der Gleichstrombrennzone;
- lokale Überhitzung und sogar Versinterung des Brenngutes in der Gleichstrombrennzone und in der Gegenstrombrennzone;
- um die lokale Überhitzung in Grenzen zu halten, ist ein hoher Luftüberschuss erforderlich, der eine hohe Abgastemperatur und einen hohen Energieverbrauch bedingt;
- aufgrund der lokalen Überhitzung kommt es zu einer schlechteren Produktqualität.

Die EP 1 669 709 A1 beschreibt einen Ringschachtofen mit mehreren Brennerbalken, die jeweils den seitlichen Abschluss von Brennkammern bilden, wobei die Brennerbalken mit zusätzlichen Brennlanzen versehen sind.

Aus der EP 0 139 025 A1 ist ein in Gleichstrombereich und Gegenstrombereich, unterteilter Ringschachtofen mit mehreren Brennkammern bekannt. Weiterhin beschreiben die DE 22 27 516 A1 und die JP 56 173637 U Schachtöfen, die den Brennstoff über verschiebbare Brennerlanzen zuführten.

Der Erfindung liegt daher die Aufgabe zugrunde, einen Ringschachtofen und ein Verfahren zum Brennen von stückigem Material in einem Ringschachtofen anzugeben, bei dem auch bei einem Einsatz von festem Brennstoff Überhitzungen im Bereich der Brennkammern vermieden und eine hohe Produktqualität gewährleistet werden kann.

Erfindungsgemäß wird diese Aufgabe durch die Merkmale der Ansprüche 1 und 7 gelöst.

Der erfindungsgemäße Ringschachtofen zum Brennen von stückigem Material besteht im Wesentlichen aus einem Außenzylinder und einem Innenzylinder, die einen Ringschacht für das zu brennende Material bilden sowie mehreren, in wenigstens einer Brennerebene am Außenzylinder angeordneten Brennkammern wobei der Ringschachtofen zumindest einen Gleichstrombereich und einen Gegenstrombereich aufweist. Weiterhin sind zusätzliche Brennlanzen durch den Außenzylinder geführt, die in der Draufsicht zwischen benachbarten Brennerkammern angeordnet sind und die zusätzlichen Brennlanzen im Ringschacht verschiebbar angeordnet sind und wobei die Brennkammern mit den zusätzlichen Brennlanzen zumindest im Gleichstrombereich vorgesehen sind.

Beim erfindungsgemäßen Verfahren wird in den Brennkammern eines derartigen Ringschachtofens Brennstoff verbrannt. Zudem wird über zusätzliche Brennlanzen weiterer Brennstoff durch den Außenzylinder und in der Draufsicht zwischen benachbarten Brennkammern zugeführt und die zusätzlichen Brennlanzen werden zumindest im Gleichstrombereich betrieben und sind verschiebbar.

Durch die zusätzlichen Brennlanzen kann der Brennstoff besser verteilt werden, so dass lokale Überhitzungen im Bereich der Brennkammern vermieden werden können. Eine gleichmäßigere Verteilung des Brennstoffs führt zudem zu einem besseren Ausbrand, so dass keine Materialablagerungen im Bereich des Innenzylinders entstehen. Außerdem werden lokale Überhitzungen bzw. Versinterungen des Brenngutes durch eine gleichmäßigere Verteilung des Brennstoffes vermieden, so dass eine hohe Produktqualität gewährleistet wird. Durch die bessere Verteilung des Brennstoffes ist es zudem nicht mehr erforderlich, dass die Luft neben der Verbrennung des Brennstoffes auch eine Kühlfunktion für die Brennkammern übernehmen muss.

Weitere Ausgestaltungen der Erfindung sind Gegenstand der Unteransprüche.

Die zusätzlichen Brennlanzen sind zweckmäßigerweise in der wenigstens einen Brennerebene zwischen den Brennkammern angeordnet, sodass sich die Flamme über die gesamte Brennzonenhöhe gleichmäßig ausbilden kann.

Zweckmäßigerweise sind wenigstens zwei Brennerebenen mit Brennkammern und dazwischen angeordneten zusätzlichen Brennlanzen vorgesehen.

Gemäß einer besonderen Ausgestaltung der Erfindung kann in jeder Brennkammer ein Brenner vorgesehen werden, der horizontal oder schräg in den Ringschacht mündet. Die zusätzlichen Brennlanzen sind vorzugsweise radial verschiebbar angeordnet. Sie können zudem gekühlt oder nicht gekühlt ausgebildet werden.

Beim erfindungsgemäßen Verfahren zum Brennen von stückigem Material wird sowohl in den Brennkammern als auch über die zusätzlichen Brennlanzen fester und/oder flüssiger Brennstoff verbrannt. Des Weiteren wird den zusätzlichen Brennlanzen vorgewärmte oder nicht vorgewärmte Verbrennungsluft zugeführt. Ein Teil der den zusätzlichen Brennlanzen zugeführten Verbrennungsluft kann dabei durch das im Ringschachtofen entstehende Rauchgas gebildet werden.

Gemäß einer zusätzlichen Option kann die Temperatur in den Brennkammern ermittelt und die Brennstoffverteilung zwischen den Brennkammern und den zusätzlichen Brennlanzen in Abhängigkeit der Temperatur in den Brennkammern geregelt werden. Auf diese Weise kann sichergestellt werden, dass es in den Brennkammern nicht zu Überhitzungen kommt.

Weitere Vorteile und Ausgestaltungen der Erfindung werden im Folgenden anhand der Beschreibung und der Zeichnung näher erläutert.

In der Zeichnung zeigen
- Fig. 1: einen Vertikalschnitt eines erfindungsgemäßen Ringschachtofens längs der Linie A-A der Fig. 2,
- Fig. 2: eine Schnittdarstellung des Ringschachtofens längs der Linie B-B der Fig. 1,
- Fig. 3: ein Schnittdarstellung im Bereich des Ringschachtes längs der Linie C-C der Fig.2 und
- Fig. 4: eine Schnittsdarstellung einer zusätzlichen Brennlanze.

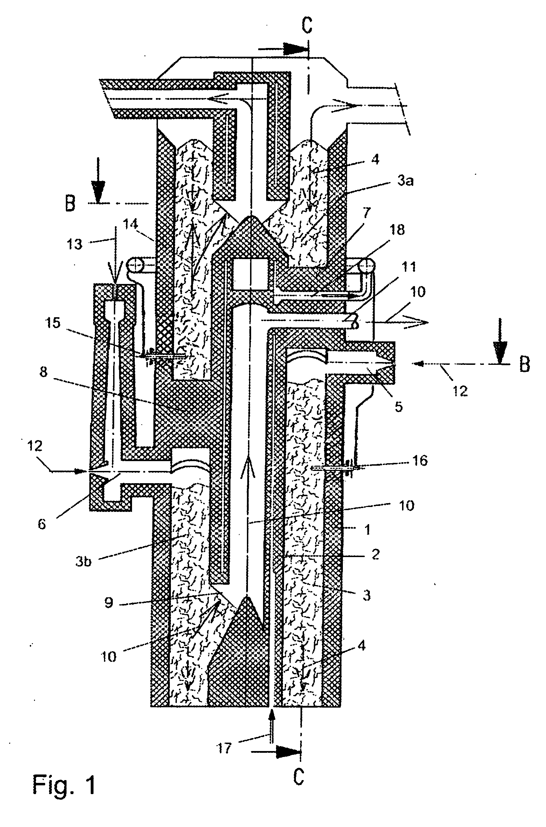

Der in den Figuren 1 bis 3 dargestellte Ringschachtofen besteht im Wesentlichen aus einem vertikal ausgerichteten Außenzylinder 1 und einem Innenzylinder 2, die einen Ringschacht 3 für das zu brennende Material 4 bilden. Weiterhin sind im dargestellten Ausführungsbeispiel zwei Brennerebenen mit am Außenzylinder 1 angeordneten Brennkammern 5 bzw. 6 vorgesehen.

In der oberen und der unteren Brennerebene sind jeweils vier Brennkammern 5 bzw. 6 gleichmäßig über den Umfang verteilt angeordnet. Es können aber auch mehr oder weniger, insbesondere drei bis sechs Brennkammern vorgesehen werden.

Unmittelbar oberhalb der Brennkammern 5, 6 erstrecken sich Brücken 7, 8 zwischen dem Außenzylinder 1 und dem Innenzylinder 2, um den Innenzylinder 2 zu stützen.

Der Innenzylinder 2 ist hohl ausgebildet und enthält in seiner Wand Öffnungen 9, durch die Umwälzgas 10 aus dem Ringschacht 3 abströmen und über Leitungen 1 in wenigstens einer der Brücken 7 abgeleitet werden kann.

Die Brennkammern 5, 6 werden zum einen mit Brennstoff 12 und zum anderen mit Verbrennungsluft 13 beaufschlagt, wobei als Verbrennungsluft auch ein Teil des abgeleiteten Umwälzgases 10 verwendet werden kann. Das entstehende Abgas 14 der oberen Brennkammern 5 wird im Ringschacht im Wesentlichen nach oben abgeleitet, und strömt dort im Gegenstrom zu dem behandelnden Material 4. Man bezeichnet den oberen Bereich des Ringschachtes daher auch als Gegenstrombereich 3a.

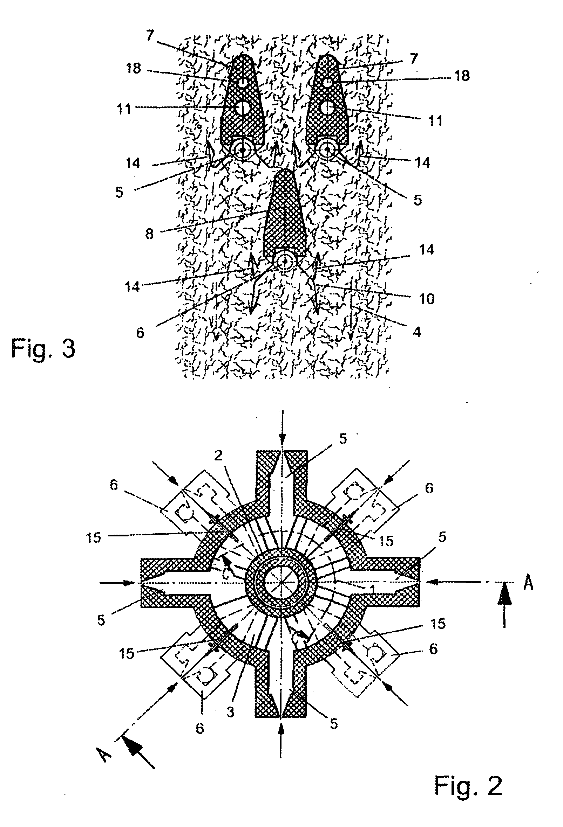

Die den unteren Brennkammern 6 zugeführte Verbrennungsluft wird teilweise als Abgas 14 nach oben und teilweise als Umwälzgas 10 nach unten und dann über den Innenzylinder 2 abgeführt (siehe insbesondere Figuren 1 und 3). Den unteren Bereich des Ringschachtes bezeichnet man daher auch als Gleichstrombereich 3b.

In jeder Brennkammer sind nicht näher dargestellte Brenner vorgesehen, die horizontal oder schräg in den Ringschacht münden. Das entstehende Abgas 14 wird in üblicher Art und Weise im oberen Bereich des Ringschachtes abgeleitet.

Neben den Brennkammern sind zusätzliche Brennlanzen 15, 16 vorgesehen. Die durch den Außenzylinder 1 geführt sind und in der Draufsicht (siehe Fig. 2) zwischen den Brennkammern 5 bzw. 6 angeordnet sind. Im dargestellten Ausführungsbeispiel sind die zusätzlichen Brennlanzen 15 in einer Brennerebene mit den Brennkammer 5 und die zusätzlichen Brennlanzen 16 in einer Brennerebene mit den Brennkammer 6 angeordnet. Die zusätzlichen Brennlanzen 15, 16 ragen somit in den Ringschacht 3 und damit in die Materialschüttung hinein. Die zusätzlichen Brennlanzen werden insbesondere mit flüssigem und/oder festem Brennstoff sowie Verbrennungsluft beaufschlagt. Als Verbrennungsluft kommt insbesondere vorgewärmte oder nicht vorgewärmte Verbrennungsluft zur Anwendung, die zum Teil durch das Umwälzgas 10 oder auch durch ein Kühlgas 17 gebildet wird, welches zur Kühlung des Innenzylinders 2 verwendet und über eine Leitung 18 abgeleitet wurde.

Die zusätzlichen Brennlanzen 15, 16 sind vorzugsweise radial verstellbar, sodass sich die Position ihrer Mündungen im zu behandelnden Material 4 so anordnen lassen, dass in der betreffenden Brennerebene eine weitgehend gleichmäßige Brenntemperatur entsteht. Der in den Brennkammern zu verbrennende Brennstoff kann somit durch die zusätzlichen Brennlanzen reduziert werden, sodass Überhitzungen der Ofenausmauerung im Bereich der Brennkammern vermieden werden können. Auch lokale Überhitzungen und etwaige Versinterungen des Brenngutes sind dann nicht mehr festzustellen.

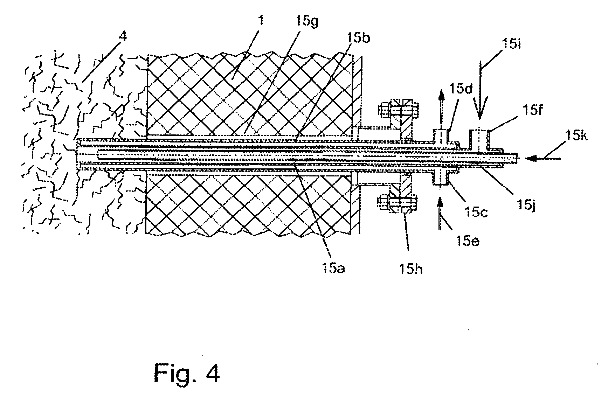

Anhand der Fig. 4 wird im Folgenden die zusätzliche Brennlanze 15 näher beschrieben, wobei die Beschreibung auch für die zusätzliche Brennlanze 16 zutreffend ist.

Die zusätzliche Brennlanze besteht im Wesentlichen aus einem Brennrohr 15a, das von einem Kühlmantel 15b umschlossen ist, der Anschlussstutzen 15c, 15d für die Hindurchleitung einer Kühlflüssigkeit 15e aufweist. An Brennlanzen, an denen eine geringere Temperaturbelastung zu erwarten ist, kann anstatt eines Kühlmantels für den betreffenden Lanzenbereich auch ein hitzebeständiges Material verwendet werden.

Das Brennrohr 15a hat einen Anschlussstutzen 15f für die Zuleitung primärer Verbrennungsluft 15i und ist innen mit einem Brennstoffrohr 15j zur Zuführung von Brennstoff 15k versehen.

Die Brennlanzen 15, 16 sind durch eine Wandbohrung 15g im Außenzylinder 1 verschiebbar hindurch geführt und werden mittels einer stopfbuchsartigen Dichtanordnung 15h nach außen abgedichtet.

Gemäß einer weiteren Option kann die Temperatur in den Brennkammern durch geeignete Temperaturmessgeräte (Pyrometer) ermittelt werden, um die Brennstoffverteilung zwischen den Brennkammern und den zusätzlichen Brennlanzen in Abhängigkeit der Temperatur in den Brennkammern zu regeln. Auf diese Weise kann sichergestellt werden, dass es in den Brennkammern nicht zu Überhitzungen kommt.

Die zusätzlichen Brennlanzen 15, 16 ermöglichen eine gleichmäßig Temperaturverteilung, sodass lokale Überhitzungen vermieden werden und das Material mit einer hohen Produktqualität erzeugt werden kann. Auch der Luftüberschuss im Bereich der Brennkammern kann deutlich reduziert werden, da die Luft keine Kühlfunktionen übernehmen muss, sodass der Energieverbrauch gesenkt werden kann.

## Patentansprüche

1. Ringschachtofen zum Brennen von stückigem Material mit einem Außenzylinder (1) und einem Innenzylinder (2), die einen Ringschacht (3) für das zu brennende Material (4) bilden sowie mit mehreren, in wenigstens einer Brennerebene am Außenzylinder angeordneten Brennkammern (5, 6), wobei der Ringschachtofen zumindest einen Gleichstrombereich (3b) und einen Gegenstrombereich (3a) aufweist,
**dadurch gekennzeichnet, dass** zusätzliche Brennlanzen (15, 16) durch den Außenzylinder (1) geführt sind, die in der Draufsicht zwischen benachbarten Brennkammern (5, 6) angeordnet sind und die zusätzlichen Brennlanzen (15, 16) im Ringschacht verschiebbar angeordnet sind und wobei die Brennkammern (5, 6) mit den zusätzlichen Brennlanzen (15, 16) zumindest im Gleichstrombereich vorgesehen sind.

2. Ringschachtofen nach Anspruch 1, **dadurch gekennzeichnet, dass** die zusätzlichen Brennlanzen (15, 16) in der wenigstens einen Brennerebene zwischen den Brennkammern (5, 6) angeordnet sind.

3. Ringschachtofen nach Anspruch 1, **dadurch gekennzeichnet, dass** wenigstens zwei Brennerebenen mit Brennkammern (5, 6) und dazwischen angeordneten zusätzlichen Brennlanzen (15, 16) vorgesehen sind.

4. Ringschachtofen nach Anspruch 1, **dadurch gekennzeichnet, dass** in jeder Brennkammer (5, 6) ein Brenner vorgesehen ist, der horizontal oder schräg in den Ringschacht (3) mündet.

5. Ringschachtofen nach Anspruch 1, **dadurch gekennzeichnet, dass** die zusätzlichen Brennlanzen (15, 16) im Ringschacht radial verschiebbar angeordnet sind.

6. Ringschachtofen nach Anspruch 1, **dadurch gekennzeichnet, dass** die zusätzlichen Brennlanzen (15, 16) gekühlt ausgebildet sind.

7. Verfahren zum Brennen von stückigem Material in einen Ringschachtofen mit einem Außenzylinder (1) und einem Innenzylinder (2), die einen Ringschacht für das zu brennende Material (4) bilden sowie mit mehreren, in wenigstens einer Brennerebene am Außenzylinder angeordneten Brennkammern (5, 6), wobei in den Brennkammen Brennstoff verbrannt wird, wobei der Ringschachtofen mit zumindest einem Gleichstrombereich (3b) und einem Gegenstrombereich (3a) betrieben wird,
**dadurch gekennzeichnet, dass** über zusätzliche Brennlanzen (15, 16) weiterer Brennstoff durch den Außenzylinder (1) und in der Draufsicht zwischen benachbarten Brennkammern (5, 6) zugeführt wird und die zusätzlichen Brennlanzen (15, 16) zumindest im Gleichstrombereich betrieben werden und verschiebbar sind.

8. Verfahren nach Anspruch 7, **dadurch gekennzeichnet, dass** sowohl in den Brennkammern (5, 6) als auch über die zusätzlichen Brennlanzen (15, 16) fester und/oder flüssiger Brennstoff verbrannt wird.

9. Verfahren nach Anspruch 7, **dadurch gekennzeichnet, dass** den zusätzlichen Brennlanzen (15, 16) Verbrennungsluft zugeführt wird.

10. Verfahren nach Anspruch 7, **dadurch gekennzeichnet, dass** den zusätzlichen Brennlanzen (15, 16) vorgewärmte Verbrennungsluft zugeführt wird.

11. Verfahren nach Anspruch 7, **dadurch gekennzeichnet, dass** den zusätzlichen Brennlanzen (15, 16) nicht vorgewärmte Verbrennungsluft zugeführt wird.

12. Verfahren nach Anspruch 7, **dadurch gekennzeichnet, dass** ein Teil der den zusätzlichen Brennlanzen (15, 16) zugeführten Verbrennungsluft durch im Ringschachtofen entstehendes Rauchgas gebildet wird.

13. Verfahren nach Anspruch 7, **dadurch gekennzeichnet, dass** die Temperatur in den Brennkammern ermittelt wird und die Brennstoffverteilung zwischen den Brennkammern und den zusätzlichen Brennlanzen in Abhängigkeit der Temperatur in den Brennkammern geregelt wird.

## Claims

1. Annular shaft kiln for burning fragmented material having an outer cylinder (1) and an inner cylinder (2) which form an annular shaft (3) for the material (4) to be burnt, and having a plurality of combustion chambers (5, 6) which are arranged on the outer cylinder in at least one combustion plane, the annular shaft kiln having at least a direct current region (3b) and a counter-current region (3a), **characterised in that** there are guided through the outer cylinder (1) additional combustion lances (15, 16) which are arranged when viewed from above between adjacent combustion chambers (5, 6) and the additional combustion lances (15, 16) are movably arranged in the annular shaft and the combustion chambers (5, 6) being provided with the additional combustion lances (15, 16) at least in the direct current region.

2. Annular shaft kiln according to claim 1, **characterised in that** the additional combustion lances (15, 16) are arranged in the at least one combustion plane between the combustion chambers (5, 6).

3. Annular shaft kiln according to claim 1, **characterised in that** there are provided at least two combustion planes having combustion chambers (5, 6) and additional combustion lances (15, 16) which are arranged therebetween.

4. Annular shaft kiln according to claim 1, **characterised in that** there is provided in each combustion chamber (5, 6) a burner which opens horizontally or in an inclined manner in the annular shaft (3).

5. Annular shaft kiln according to claim 1, **characterised in that** the additional combustion lances (15, 16) are arranged in a radially displaceable manner in the annular shaft.

6. Annular shaft kiln according to claim 1, **characterised in that** the additional combustion lances (15, 16) are constructed in a cooled manner.

7. Method for burning fragmented material in an annular shaft kiln having an outer cylinder (1) and an inner cylinder (2) which form an annular shaft for the material (4) to be burnt and having a plurality of combustion chambers (5, 6) which are arranged on the outer cylinder in at least one combustion plane, fuel being burnt in the combustion chambers, the annular shaft kiln being operated with at least a direct current region (3b) and a counter-current region (3a), **characterised in that** via additional combustion lances (15, 16) additional fuel is supplied through the outer cylinder (1) and when viewed from above between adjacent combustion chambers (5, 6) and the additional combustion lances (15, 16) are operated and can be displaced at least in the direct current region.

8. Method according to claim 7, **characterised in that** solid and/or fluid fuel is burnt both in the combustion chambers (5, 6) and via the additional combustion lances (15, 16).

9. Method according to claim 7, **characterised in that** combustion air is supplied to the additional combustion lances (15, 16).

10. Method according to claim 7, **characterised in that** preheated combustion air is supplied to the additional combustion lances (15, 16).

11. Method according to claim 7, **characterised in that** non-preheated combustion air is supplied to the additional combustion lances (15, 16).

12. Method according to claim 7, **characterised in that** part of the combustion air supplied to the additional combustion lances (15, 16) is formed by exhaust gas which is produced in the annular shaft kiln.

13. Method according to claim 7, **characterised in that** the temperature in the combustion chambers is established and the combustion material distribution between the combustion chambers and the additional combustion lances is adjusted in accordance with the temperature in the combustion chambers.

## Revendications

1. Four droit annulaire pour la calcination de matériau fractionné, avec un cylindre extérieur (1) et un cylindre intérieur (2), qui forment une cuve annulaire (3) pour le matériau à calciner (4), ainsi que plusieurs chambres de calcination (5, 6), agencées sur la cylindre extérieur, dans au moins un plan de combustion, sachant que le four droit annulaire est doté d'au moins une zone à écoulements parallèles (3b) et d'une zone à contre-courant (3a),
**caractérisé en ce que** des lances de combustion (15, 16) supplémentaires, qui, vues d'en haut, sont disposées entre des chambres de calcination (5, 6) voisines, passent à travers le cylindre extérieur (1) et que les lances de combustion (15, 16) supplémentaires sont installées, déplaçables, dans la cuve annulaire, et sachant que les chambres de calcination (5, 6) sont prévues, avec les lances de combustion (15, 16), au moins dans la zone d'écoulements parallèles.

2. Four droit annulaire selon la revendication 1, **caractérisé en ce que** les lances de combustion (15, 16) supplémentaires sont disposées entre les chambres de calcination (5, 6), dans le plan de combustion au moins prévu.

3. Four droit annulaire selon la revendication 1, **caractérisé en ce que** sont prévus aux moins deux plans de combustion avec des chambres de calcination (5, 6) et des lances de combustion (15, 16) supplémentaires, disposées entre celles-ci.

4. Four droit annulaire selon la revendication 1, **caractérisé en ce que** dans chaque chambre de calcination (5, 6) est prévu un brûleur, qui aboutit horizontalement ou obliquement dans la cuve annulaire (3).

5. Four droit annulaire selon la revendication 1, **caractérisé en ce que** les lances de combustion (15, 16) supplémentaires sont agencées dans la cuve annulaire de manière à pouvoir être déplacées dans la direction radiale.

6. Four droit annulaire selon la revendication 1, **caractérisé en ce que** les lances de combustion (15, 16) supplémentaires sont refroidies.

7. Procédé de calcination de matériau fractionné, dans un four droit annulaire, avec un cylindre extérieur (1) et un cylindre intérieur (2), qui forment une cuve annulaire pour le matériau à calciner (4), ainsi que plusieurs chambres de calcination (5, 6), agencées sur le cylindre extérieur, dans au moins un plan de combustion, sachant qu'une matière combustible est brulée dans les chambres de calcination, sachant que le four droit annulaire fonctionne avec au moins une zone d'écoulements parallèles (3b) et une zone de contre-courant (3a), **caractérisé en ce qu'**un autre combustible est amené à travers le cylindre extérieur (1) et, en vue de dessus, entre des chambres de calcination (5, 6) voisines, et que les lances de combustion (15, 16) supplémentaires sont exploitées au moins dans la zone d'écoulements parallèles et peuvent être déplacées.

8. Procédé selon la revendication 7, **caractérisé en ce qu'**une matière combustible solide et / ou liquide est brûlée dans les chambres de calcination (5, 6) de même que par l'intermédiaire des lances de combustion (15, 16) supplémentaires.

9. Procédé selon la revendication 7, **caractérisé en ce que** de l'air de combustion est conduit aux lances de combustion (15, 16) supplémentaires.

10. Procédé selon la revendication 7, **caractérisé en ce que** de l'air de combustion préchauffé est conduit aux lances de combustion (15, 16) supplémentaires.

11. Procédé selon la revendication 7, **caractérisé en ce que** de l'air de combustion non préchauffé est conduit aux lances de combustion (15, 16) supplémentaires.

12. Procédé selon la revendication 7, **caractérisé en ce qu'**une partie de l'air de combustion conduit aux lances de combustion (15, 16) supplémentaires est formée par le gaz de combustion produit dans le four droit annulaire.

13. Procédé selon la revendication 7, **caractérisé en ce que** la température est détectée dans les chambres de calcination et que la répartition du combustible entre les chambres de calcination et les lances de combustion supplémentaires est réglée en fonction de la température dans les chambres de calcination.
